# EUROPEAN PATENT APPLICATION

(11) **EP 1 353 432 A2**
(43) Date of publication of application: **15.10.2003**
(21) Application number: 03008268.9
(22) Date of filing: 09.04.2003
(51) Int. Cl.: H02K 1/27

(54) **Magnet arrangement for rotating electrical machine**

(30) Priority: 10.04.2002 JP 2002107538; 03.04.2003 US 249378
(71) Applicant: Kabushiki Kaisha Moric, Shuuchi-gun, Shizuoka-ken (JP)
(72) Inventor: Morimatsu, Masaki, c/o Kabushiki Kaisha Moric, Shuuchi-gun, Shizuoka-ken (JP)
(74) Representative: Leson, Thomas Johannes Alois, Dipl.-Ing.

(57) **Abstract**

Several embodiments of magnet retainers for rotating electrical machines that provide excellent magnet retention even if very thin high strength magnets are employed and without requiring adhesives.

## Description

### Background of Invention

This invention relates to a magnets mounting structure for a rotary electric machine and particularly to a magnet holding structure wherein the individual permanent magnets are physically retained in position.

In most rotary electric machines such as generators and motors, a plurality of permanent magnets are positioned in confronting relation to electrical coils. Generally this is done by positioning a slotted ring in engagement with a cylindrical shell. The permanent magnets are loosely positioned in the slots of the ring. An adhesive is then inserted between the walls of the slots and the magnets to retain them in position.

Conventionally, when ferrite based magnets were used, the magnets generally had a thickness of 5 mm or more, and the holder ring, too, had a thickness corresponding to that of the magnets.

However ferrite based permanent magnets are being replaced by high energy neodymium (Nd) based magnets. When the neodymium-based magnets are used, the magnets can be reduced significantly in thickness. Thickness are generally 3mm or less, however the magnetic force is increased from that of ferrite based magnets so that increased output is effected.

This gives rise to another problem. Since the neodymium-based magnets are so thin, the magnets placed on the slotted ring tend to fall off during assembly. Furthermore the thinness adds to the assembly time. Also, because of the higher magnetic force there is the possibility that the magnets will be drawn off of the slotted ring when positioned in proximity to the coil windings.

Therefore it is a principal object of this invention to provide an improved magnet holding arrangement for a rotating electrical machine that is particularly adapted to physically retain very thin magnets.

### Summary of Invention

The invention is adapted to be embodied in a magnet arrangement for a rotating electrical machine. The machine is comprised of a cylindrical shell and a magnet carrier having a cylindrical portion complimentary to and engaged with a surface of the cylindrical shell. The magnet carrier is formed with a plurality of circumferentially spaced, axially extending projections defining open ended gaps therebetween. A plurality of permanent magnets are provided with each magnet being received and physically retained in a respective one of the gaps

### Brief Description of Drawings

FIG. 1 is a cross sectional view taken through a portion of an internal combustion engine having an electrical generator constructed in accordance with an embodiment of the invention.

FIG. 2 is an enlarged view, in part similar to FIG. 1, but shows more detail of the generator and its attachment to the driving shaft of the engine.

FIG. 3 is an end elevational view looking in the direction of the arrow 3 in FIG. 2.

FIG. 4 is an exploded perspective view of the magnet assembly constructed in accordance with a first embodiment.

FIG. 5 is an end view of one of the permanent magnets.

FIG. 6 is a side elevational view of one of the permanent magnets.

FIG. 7 is an end view of a magnet holder constructed in accordance with another embodiment.

FIG. 8 is an side elevational view of the magnet holder in accordance with this other embodimentFIG. 9 is end view of the magnet carrier or rotor of this embodiment a side elevational view of the magnet holder constructed in accordance with this embodiment and is taken in the direction of the arrows 9-9 of FIG. 10.

FIG. 10 is a cross sectional of the magnet carrier or rotor of this embodiment taken along the line 10-10 of FIG. 9.

FIG. 11 is end view, in part similar to FIG. 7 of a complete magnet holder constructed in accordance with another embodiment taken in the direction of the arrows 11-11 of FIG. 12. 2.

FIG. 12 is a cross sectional of the magnet holder of this embodiment looking in the direction of the line 12-12 of FIG. 11.

FIG. 13 is end view of an inner casing taken in the direction of the arrows 13-13 of FIG. 14.

FIG. 14 is a cross sectional of the inner casing looking in the direction of the line 14-14 of FIG. 13.

### Detailed Description

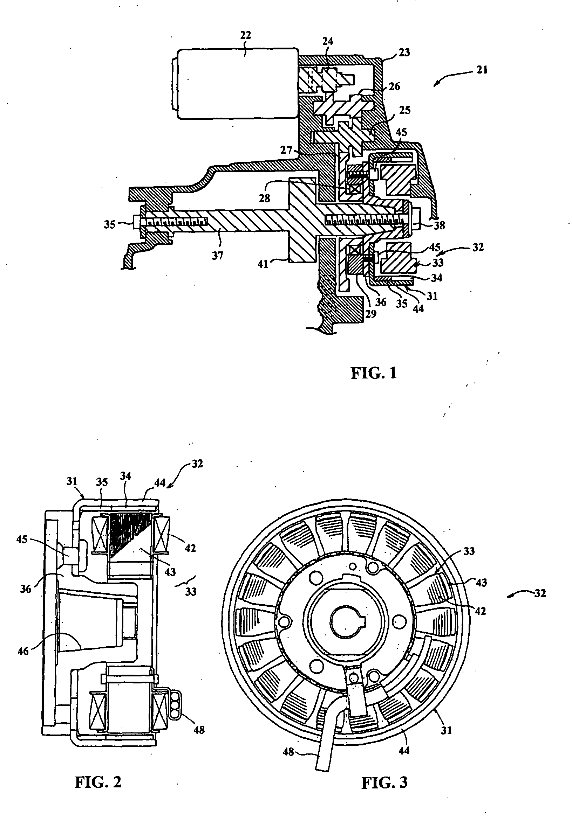

Referring now in detail to the drawings and initially to FIG. 1, a portion of a motor vehicle engine is illustrated in part and partially in cross section, indicated generally at 21. Such an application is utilized as this is a typical environment in which the invention may be utilized. Of course, those skilled in the art will readily recognize other applications for the invention.

The engine 21 includes an electric starter motor 22 that is fixed to the engine body 23. An output gear 24 of the starter motor 22 is drives a reduction gear 25 via an intermediate gear 26. The reduction gear 25 drives a starter gear 27. The started gear 27 is coupled via a one way clutch 28 to a drive ring 29. The drive ring 29, in turn, is coupled to the rotor 31 of an electrical generator, indicated generally at 32, and which embodies the invention.

The rotor 31 cooperates with a stator 33 that is fixed to the engine frame 23. The stator has poles around which coils are wound, as is well known in the art. These coils cooperate with permanent magnets 34 fixed in a manner according to the invention as will be described later initially by reference to FIGS. 2 and 3. The magnets 34 are held in a magnet holder indicated in this figure as 35.

The rotor 31 is connected to a hub 36 fixed secured to the end of a speed increasing shaft 37 with a bolt 38 and a key (not shown). The speed increasing shaft 37 is rotatably mounted on the engine body 23 through a bolt 39 and a bearing (not shown). The speed increasing shaft 37 is provided with a speed increasing gear 41.
The speed increasing gear 41 is connected to a crankshaft (not shown).

The turning action of the starter motor 22 is reduced in speed and transmitted to the starter gear 27, which in turn rotates the hub 36 via the one-way clutch 28. Accordingly, the rotational action of the crankshaft starts via the speed increasing shaft 37 to cause the engine to start. When the crankshaft rotates at higher speed than the starter motor 22 the clutch 28 will overrun.

A more detailed description of the electrical generator 32 will now be made by reference to FIGS. 2 and 3. The generator 32 is constructed so that that the rotor assembly 31 is mounted around the stator assembly 33. This stator assembly 33 includes a plurality of (in this example, eighteen) coils 42 wound around cores 43.

The rotor assembly 31, as described above, is arranged such that the magnets 34 are held by the holder ring 35 mounted to the inner side of a rotor outer cylinder body portion 44, the magnets 54 are internally pressed against the rotor outer cylinder body portion 44 in a manner to be described later, by reference to the remaining figures. The rotor outer cylinder 44 is secured to the hub 36 with bolts or rivets 45. The connecting hub 36 has a conical, tapered-shaped mounting hole 46 for mounting on the shaft 37. The reference numeral 48 designates a 3-phase cable for the coil windings 42.

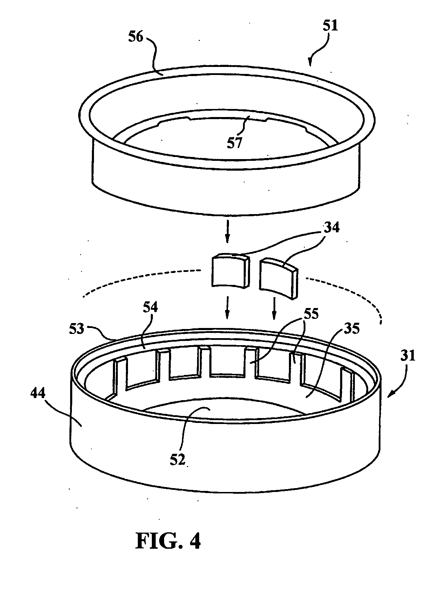

The construction of embodiments of the magnet carrier 35 and its relation to the remainder of the rotor assembly will now be described by reference to the remaining figures and initially by specific reference to FIG. 4. The rotor 31 is comprised of the rotor outer cylinder body 44 with the magnet holder ring 35 fitted to the inner side thereof. The magnet pressing member afore referred to comprises an inner casing 51 further fitted to the inner side of the holder ring 35. A plurality of magnets 54 are held by the holder ring 35.

The rotor outer cylinder 44 is entirely opened at one end and is closed at the other end by an integral end plate 52 at the other end thereof. Around the perimeter of the upper end of the side wall is formed an outer edge 53 with a step 54 on the inner side thereof.

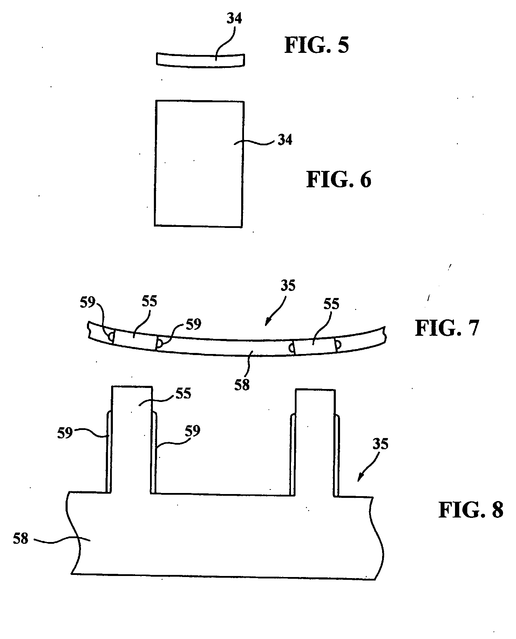

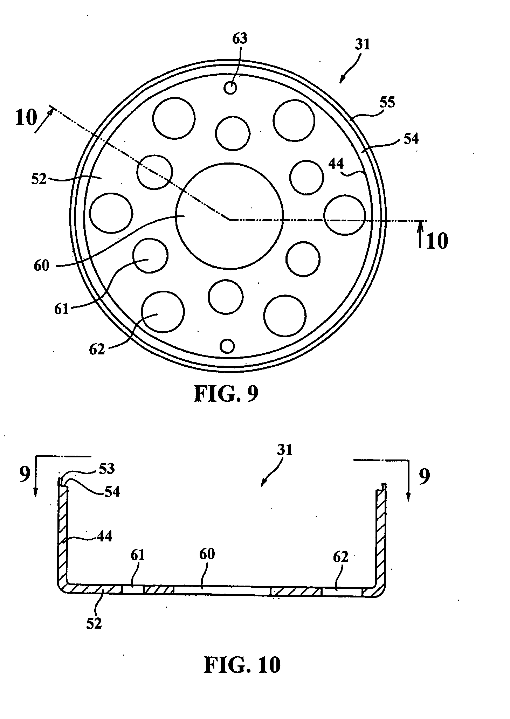

The holder ring 35 is made of resin and has a plurality of axially extending projections 55 projecting toward the open end (upper end) side of the side wall at regular intervals. In the slots thus formed between the respective projections 55 are inserted and held eighteen, for example, magnets 34 in a press-fitted state.
Accordingly, the slots formed between the respective projections 55 is equal to or slightly smaller than the width of the magnet 34 so that the projection 55 and the magnet 34 are in press contact with each other. Press-contacting ribs, as shown in FIGS. 7 and 8 to be described shortly, may be provided on the sides of the respective projections 55.

The projections 55 have a axial length at least half the length of the magnets 34 or longer. Therefore, the magnets 34 can securely be held by the projections 55.

The inner casing 51 has an outer radially extending flange 56 at its upper edge and a radially extending inner flange 57 at its lower edge. When the inner casing 51 is inserted into the rotor outer cylinder 44 with the holder ring 35 and the magnets 34 sandwiched therebetween, the inner flange 53 is in contact with the end plate 52 of the rotor outer cylinder 44 and the outer flange 56 is engaged with the step 54 of the upper edge of the rotor outer cylinder 44.

Referring now to FIGS. 5 and 6, these are a top and a front view, respectively, of the magnets 34. The magnets 34 are high-energy, neodymium-based magnets and are radially disposed around the inner periphery side of the rotor outer cylinder 44. As shown in a FIG. 5 the magnets 34 have an arcuate shape in section around the inner periphery of the rotor outer cylinder 44 and a thickness of 3mm or less.

It has been noted that the press fitting of the magnets 34 into the slots formed between the projections 55 can be facilitated by forming ribs on the edges of the projections 55. This is illustrated in FIGS. 7 and 8 and will now be described by reference thereto. As has been noted, the holder ring 35 has the plurality of projections 55. These extend axially from the upper edge of a ring part 58 at regular intervals in a tooth-like manner. As described above, the space between the projections 55 has such a width that the magnet 34 will be in press-contact therewith The projections 55 have a length of half the magnet or longer. In this embodiment , longitudinal ribs 59 project from the sides of the respective projections 55. Thus, the press-contacting force exerted against the magnets 34 is increased.

The construction of the outer shell 44 will now be described in more detail by reference to FIGS. 9 and 10. As has been noted, The rotor outer cylinder has the cylindrical side wall 44 which is entirely opened at its upper end and has the end plate 52 at its lower end. Around the perimeter of the upper end of the side wall 44 is formed the outer edge 55, and on the inner side thereof is formed the step 54.

In the center of the end plate 52 is provided an opening 60 for passing the shaft 37 (FIG.1). In the end plate 52 are further provided mounting holes 61 for mounting the rotor outer cylinder 44 on the connecting wheel 36 shown in FIG.1. Also bolt-through connecting holes 62 are formed for connecting the rotor outer cylinder 44 to the one-way clutch 28. Also mounting holes 63 for mounting the inner flange 57 of the inner casing 51 to the rotor outer cylinder 44. When so mounted, the outer flange 56 of the inner casing 51 may be locked in position by inwardly bending the edge 55 toward the step 42.

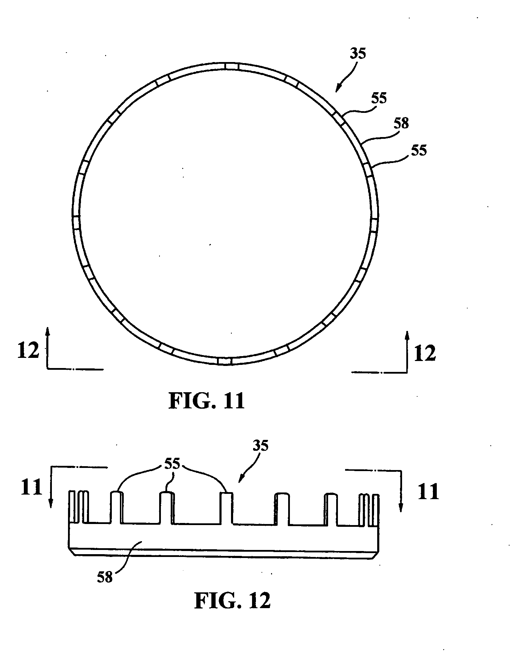

The magnet holder ring 35 is shown enlarged in FIGS 11 and 12 and the parts already described in detail above are indicated by the same reference numerals. Further description of these figures, therefore is not believed to be necessary.

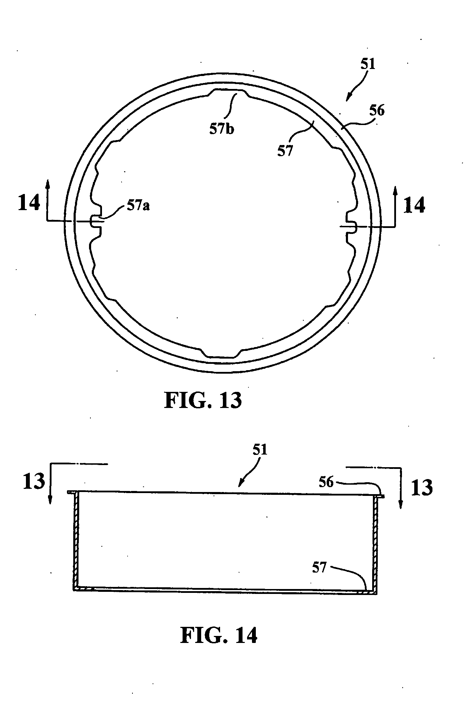

FIGS. 13 and 14 are enlarged views of the inner casing 51 which also has been described in detail. However these views also show that the inner flange 57 are formed mounting holes or notches 57a in alignment with the mounting holes 63 (FIGS. 9 and 10) in the end plate 52 of the rotor outer cylinder 44. The reference numeral 57b designates recesses corresponding to accommodate bolts 45 (FIG. 1) inserted into six connecting holes 62 in the end plate 52.

Thus from the foregoing description it is believed that the described structures provide excellent magnet retention even if very thin high strength magnets are employed. Of course those skilled in the art will readily understand that the foregoing description is that of preferred embodiments of the invention and that various changes and modifications may be made without departing from the spirit and scope of the invention as defined by the appended claims.

Several embodiments of magnet retainers for rotating electrical machines that provide excellent magnet retention even if very thin high strength magnets are employed and without requiring adhesives.

## Claims

1. A magnet arrangement for a rotating electrical machine comprised of a cylindrical shell, a magnet carrier having a cylindrical portion complimentary to and engaged with a surface of said cylindrical shell, said magnet carrier being formed with a plurality of circumferentially spaced, axially extending projections defining open ended gaps therebetween, and a plurality of permanent magnets each received and physically retained in a respective one of said gaps.

2. A magnet arrangement for a rotating electrical machine as set forth in claim 1 wherein the projections have an axial length at least one half of the axial extent of the permanent magnets.

3. A magnet arrangement for a rotating electrical machine as set forth in claim 1 wherein the permanent magnets are mechanically retained in a respective one of said gaps.

4. A magnet arrangement for a rotating electrical machine as set forth in claim 3 wherein the mechanically retention is achieved by a force fit.

5. A magnet arrangement for a rotating electrical machine as set forth in claim 4 wherein the force fit is achieved by ribs formed on the sides of the projections facing the gaps.

6. A magnet arrangement for a rotating electrical machine as set forth in claim 1 further including a retainer ring of cylindrical configuration in abutting relation with the side of the magnet carrier opposite the cylindrical shell.

7. A magnet arrangement for a rotating electrical machine as set forth in claim 6 wherein the projections have an axial length at least one half of the axial extent of the permanent magnets.

8. A magnet arrangement for a rotating electrical machine as set forth in claim 7 wherein the permanent magnets are mechanically retained in a respective one of said gaps.

9. A magnet arrangement for a rotating electrical machine as set forth in claim 8 wherein the mechanically retention is achieved by a force fit.

10. A magnet arrangement for a rotating electrical machine as set forth in claim 9 wherein the force fit is achieved by ribs formed on the sides of the projections facing the gaps.
